# EUROPÄISCHE PATENTSCHRIFT

(11) **EP 2 769 123 B1**
(45) Veröffentlichungstag und Bekanntmachung des Hinweises auf die Patenterteilung: **09.09.2020**
(21) Anmeldenummer: 12805567.0
(22) Anmeldetag: 15.10.2012
(51) Int. Cl.: F16H 48/22, F16H 48/08, F16H 48/34

(54) **LAMELLENSPERRE MIT DIFFERENZIALGEHÄUSE**
MULTI-DISC CLUTCH LOCK HAVING A DIFFERENTIAL HOUSING
BLOCAGE MULTIDISQUES AVEC BOÎTIER DE DIFFÉRENTIEL

(30) Priorität: 17.10.2011 DE 102011116027; 17.07.2012 DE 102012014004
(43) Veröffentlichungstag der Anmeldung: 27.08.2014
(73) Patentinhaber: Drexler, Rainer, 94124 Büchlberg (DE)
(72) Erfinder: Drexler, Rainer, 94124 Büchlberg (DE)
(74) Vertreter: Castell, Klaus
(86) Internationale Anmeldenummer: PCT/DE2012/000997
(87) Internationale Veröffentlichungsnummer: WO 2013/056691

(56) Entgegenhaltungen:
- US-A- 4 776 234
- US-A- 5 938 556
- US-A1- 2002 132 694
- US-A1- 2003 236 147
- US-A1- 2006 014 601
- US-A1- 2007 135 254
- US-A1- 2008 058 151

## Beschreibung

Die Erfindung betrifft ein Differenzial mit einer Lamellensperre mit einem Differenzialgehäuse, in dem ein Differenzialkreuz zwischen Achskegelrädern, Lamellenpakete zwischen den Achskegelrädern und dem Differenzialgehäuse und verdrehfest aber axial verschiebbar geführte Druckringe angeordnet sind, wobei die Außenlamellen der Lamellenpakete verdrehfest mit dem Differenzialgehäuse und deren Innenlamellen verdrehfest mit den Achskegelrädern verbunden sind, so dass ein eingeleitetes Antriebsmoment über das Differenzialkreuz auf die Druckringe übertragen wird, um mit den unter Last an den schiefen Anlageflächen des Differenzialkreuzes entstehenden Axialkräften die Lamellenpakete zusammen zu pressen. Eine derartige Lamellensperre wird auch als Selbstsperrdifferenzial bezeichnet.

Derartige Differenziale sind aus der US-A-2002/0132694 bekannt. Weiterhin ist aus der US-A-4 776 234 bekannt, die Sperrkraft und deren Einwirkung durch einen Aktuator mittels eines Elektromotors, der eine Kurvenscheibe dreht, zu steuern. Die bekannten Differentiale haben aber den Nachteil, dass erst ein Schlupf vorhanden sein muss bevor das Differenzial reagiert.

Weiterhin betrifft die Erfindung ein Verfahren zum Betreiben eines Differenzials mit einer Lamellensperre, insbesondere einer als Drexler® Lamellensperre mit Druckwinkel bekannten Lamellensperre.

Der Erfindung liegt die Aufgabe zu Grunde, derartige Differenziale weiterzuentwickeln und ein neues Verfahren zum Betreiben von Differenzialen vorzustellen.

Diese Aufgabe wird vorrichtungsgemäß mit einem Differenzial mit den Merkmalen des Patentanspruchs 1 gelöst.

Die Lamellensperre weist Lager auf, die aus den Kegelverzahnungen der Achskegelräder resultierende Axialkräfte auf die Druckringe übertragen. Diese Lager sind vorzugsweise Nadellager. Dadurch entsteht ein Grundsperrmoment, das abhängig vom Antriebsmoment wirkt. Dies führt zu einer wesentlich schnelleren Reaktion, da nicht zunächst ein Schlupf weggeregelt werden muss.

Vorteilhaft ist es, wenn der Aktuator eine Drehbewegung erzeugt, die über ein Zwischengetriebe und eine Kurvenscheibe die Hubbewegung erzeugt.

Die Lammellensperre weist ein Druckstück auf, um die Hubbewegung auf das Lamellenpaket zu übertragen.

Ein bevorzugtes Ausführungsbeispiel sieht vor, dass die Lammellensperre ein Steuergerät aufweist, das über ein Steuersignal den Aktuator ansteuert.

Das Steuergerät weist dann vorteilhafter Weise eine Software auf, die aus einem Fahrzeug CAN-Bus kommende Signale nach einer Regellogik in das Steuersignal umrechnet.

Die der Erfindung zu Grunde liegende Aufgabe wird auch mit einem Verfahren gelöst, bei dem mit einem Aktuator auf ein Lamellenpaket der Lamellensperre eingewirkt wird, wobei der Aktuator von einem Steuergerät angesteuert wird, das eine Software aufweist, die aus einem Fahrzeug CAN-Bus kommende Signale nach einer Regellogik in ein Steuersignal für den Aktuator umrechnet.

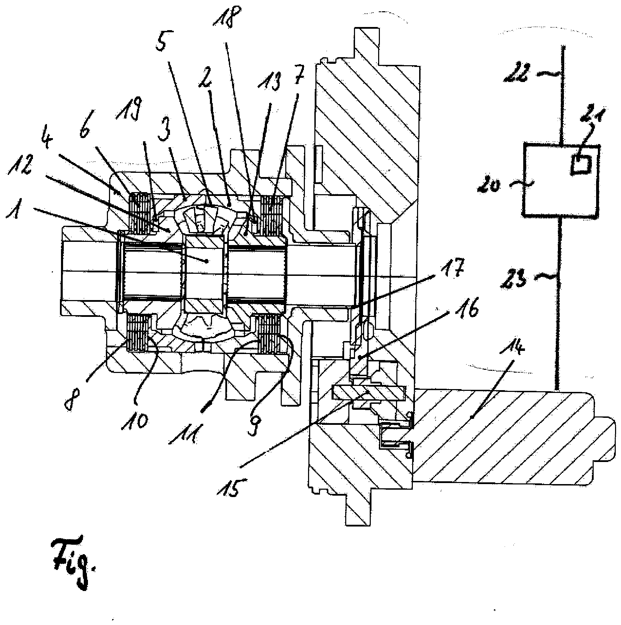

Ein Ausführungsbeispiel ist in der Zeichnung dargestellt und wird im Folgenden näher erläutert.

Es zeigt die einzige Figur einen Schnitt durch ein Differenzial mit schematisch gezeigter Steuerung.

Eine geforderte lastabhängige Sperrung ergibt sich aus dem eingeleiteten Antriebsmoment, das über das Differentialkreuz (1) auf die zwei Druckringe (2, 3) übertragen wird, die verdrehfest aber axial verschiebbar im Differentialgehäuse (4) geführt sind. Unter Last entstehen an den schiefen Auflageflächen (5) des Differentialkreuzes (1) auf den Druckringen (2, 3) Axialkräfte die das Lamellenpaket (6, 7) zusammenpressen. Die Außenlamellen (8, 9) sind verdrehfest mit dem Differentialgehäuse (4), die Innenlamellen (10, 11) verdrehfest mit den Achskegelrädern (12, 13) verbunden.

Ein Aktuator (14) wird von einem Steuergerät (20) angesteuert. Das Steuergerät (20) hat eine Software (21), die aus einem Fahrzeug CAN-Bus (22) kommende Signale nach einer Regellogik in ein Steuersignal (23) umrechnet, mit dem es den Aktuator (14) ansteuert.

Angetrieben durch den Aktuator (E-Motor) wird über ein Zwischengetriebe (15) und eine Kurvenscheibe (16) die Drehbewegung des Aktuators (14) in eine axiale Hubbewegung umgewandelt.

Diese Hubbewegung wird durch ein Druckstück (17) weitergeleitet, um die Axialkraft der axialen Hubbewegung auf das Lamellenpaket (6, 7) einer Drexler® Lamellensperre mit Druckwinkel einzustellen.

Zusätzlich werden die aus den Kegelverzahnungen der Achskegelräder (12, 13) resultierenden Axialkräfte über Nadellager (18, 19) auf die Druckringe (2, 3) übertragen und damit werden die Lamellenpakete (6, 7) zusätzlich beaufschlagt.

## Patentansprüche

1. Differenzial mit einer Lamellensperre und einem Differenzialgehäuse (4), in dem ein Differenzialkreuz (1) zwischen Achskegelrädern (12, 13), Lamellenpakete (6, 7) zwischen den Achskegelrädern (12, 13) und dem Differenzialgehäuse (4) und verdrehfest aber axial verschiebbar geführte Druckringe (2, 3) angeordnet sind, wobei die Außenlamellen (8, 9) der Lamellenpakete (6, 7) verdrehfest mit dem Differenzialgehäuse (4) und deren Innenlamellen (10, 11) verdrehfest mit den Achskegelrädern (12, 13) verbunden sind, so dass ein eingeleitetes Antriebsmoment über das Differenzialkreuz (1) auf die Druckringe (2, 3) übertragen wird, um mit den unter Last an den schiefen Anlageflächen (5) des Differenzialkreuzes (1) entstehenden Axialkräften die Lamellenpakete (6, 7) zusammen zu pressen, ***dadurch gekennzeichnet*, *dass*** zwischen mindestens einem Lamellenpaket (6, 7) und dem Differenzialgehäuse (4) ein axial verschiebbares Druckstück (17) angeordnet ist, um eine von einem Aktuator (14) ausgelöste Hubbewegung auf das Lamellenpaket (6, 7) zu übertragen und die Lamellensperre Lager (18, 19) aufweist, die aus den Kegelverzahnungen der Achskegelräder (12, 13) resultierende Axialkräfte auf die Druckringe (2, 3) übertragen.

2. Differenzial nach Anspruch 1, ***dadurch gekennzeichnet*, *dass*** der Aktuator (14) eine Drehbewegung erzeugt, die über ein Zwischengetriebe (15) und eine Kurvenscheibe (16) die Hubbewegung erzeugt.

3. Differenzial nach einem der vorhergehenden Ansprüche, ***dadurch gekennzeichnet*, *dass*** sie ein Steuergerät (20) aufweist, das über ein Steuersignal (23) den Aktuator (14) ansteuert.

4. Differenzial nach Anspruch **3**, ***dadurch gekennzeichnet*, *dass*** das Steuergerät (20) eine Software (21) aufweist, die aus einem Fahrzeug CAN-Bus (22) kommende Signale nach einer Regellogik in das Steuersignal (23) umrechnet.

5. Differenzial nach einem der vorhergehenden Ansprüche, ***dadurch gekennzeichnet*, *dass*** die Lager (18, 19) Nadellager sind.

6. Verfahren zum Betreiben eines Differenzials nach einem der Ansprüche 1 bis **5**, ***dadurch gekennzeichnet*, *dass*** mit dem Aktuator (14) auf das Lamellenpaket (6, 7) der Lamellensperre eingewirkt wird, wobei der Aktuator (14) von einem Steuergerät (20) angesteuert wird, das eine Software (21) aufweist, die aus einem Fahrzeug CAN-Bus (22) kommende Signale nach einer Regellogik in ein Steuersignal (23) für den Aktuator (14) umrechnet.

## Claims

1. A differential with a multi-disc clutch lock and a differential housing (4), arranged in which is a differential spider (1) between differential side gears (12, 13), multi-disc packs (6, 7) between the differential side gears (12, 13) and the differential housing (4), and pressure rings (2, 3) that are secured against rotation but are guided in an axially displaceable manner, wherein the outer discs (8, 9) of the multi-disc packs (6, 7) are connected in an anti-rotating manner with the differential housing (4) and their inner discs (10, 11) are connected in an anti-rotating manner with the differential side gears (12, 13) so than an applied actuating moment is transmitted via the differential spider (1) to the pressure rings (2, 3) in order, with the axial forces occurring on loading of the oblique contact surfaces (5) of the differential spider (1), to press the multi-disc pack (6, 7) together, ***characterised in that*** between at least one multi-disc pack (6, 7) and the differential housing (4) an axially displaceable pressure piece (17) is arranged in order to transfer a stroke movement triggered by an actuator (14) to the multi-disc pack (6, 7) and the multi-disc clutch lock (18, 19) has bearings which transmit the axial forces resulting from the bevel gearing of the differential side gear (12, 13) to the pressure rings (2, 3).

2. The differential according to claim 1, ***characterised in that*** the actuator (14) brings about a rotational movement which via an intermediate gear (15) and a cam plate (16) produces the stroke movement.

3. The differential according to any one of the preceding claims, ***characterised in that*** it comprises a control device (20) which controls the actuator (14) via a control signal (23).

4. The differential according to claim 3, ***characterised in that*** the control device (20) has software (21) which in accordance with a control logic converts signals coming from a vehicle CAN bus (22) into the control signal (23).

5. The differential according to any one of the preceding claims, ***characterised in that*** the bearings (18, 19) are needle bearings.

6. A method of operating a differential according to any one of claims 1 to 5, ***characterised in that*** the actuator (14) acts on the multi-disc pack (6, 7) of the multi-disc clutch lock, wherein the actuator (14) is controlled by a control device (20) which has software (21) which in accordance with a control logic converts signals coming from a vehicle CAN bus (22) into the control signal (23) for the actuator (14).

## Revendications

1. Différentiel comportant un blocage multidisques et un boîtier de différentiel (4), dans lequel une croix de différentiel (1) est disposée entre des roues coniques d'axe (12, 13), des paquets de disques (6, 7) entre les roues coniques d'axe (12, 13) et le boîtier de différentiel (4) et des bagues de compression (2, 3) rigides à la torsion mais guidées de manière à être décalables axialement, les disques extérieurs (8, 9) des paquets de disques (6, 7) étant connectés de manière rigide à la torsion au boîtier de différentiel (4) et ses disques intérieurs (10, 11) étant connectés de manière rigide à la torsion aux roues coniques d'axe (12, 13), de sorte qu'un couple d'entraînement initié par la croix de différentiel (1) sur les bagues de compression (2, 3) est transféré pour comprimer ensemble les paquets de disques (6, 7) avec les forces axiales se manifestant sous charge au niveau des surfaces d'appui obliques (5) de la croix de différentiel (1), ***caractérisé en ce que**,* entre au moins un paquet de disques (6, 7) et le boîtier de différentiel (4), est disposée une pièce de compression (17) décalable axialement afin de transférer un mouvement de levage déclenché par un actionneur (14) sur le paquet de disques (6, 7) et que le blocage multidisques présente des paliers (18, 19) qui transfèrent les forces axiales résultant des dentures coniques des roues coniques d'axe (12, 13) sur les bagues de compression (2, 3).

2. Différentiel selon la revendication 1, ***caractérisé en ce que*** l'actionneur (14) génère un mouvement rotatif qui, par l'intermédiaire d'une transmission intermédiaire (15) et d'un disque courbe (16), génère le mouvement de levage.

3. Différentiel selon une des revendications précédentes, ***caractérisé en ce qu***'il présente un appareil de commande (20) qui commande l'actionneur (14) par l'intermédiaire d'un signal de commande (23).

4. Différentiel selon la revendication 3, ***caractérisé en ce que*** l'appareil de commande (20) présente un logiciel (21) qui convertit les signaux provenant d'un bus CAN de véhicule (22) en signal de commande (23) suivant une logique de réglage.

5. Différentiel selon une des revendications précédentes, ***caractérisé en ce que*** les paliers (18, 19) sont des paliers à aiguilles.

6. Procédé d'utilisation d'un différentiel selon une des revendications 1 à 5, ***caractérisé en ce qu**'on* agit avec l'actionneur (14) sur le paquet de disques (6, 7) du blocage multidisques, l'actionneur (14) étant commandé par un appareil de commande (20) qui présente un logiciel (21) qui convertit les signaux provenant d'un bus CAN de véhicule (22) en un signal de commande (23) pour l'actionneur (14) suivant une logique de réglage.
